# EUROPEAN PATENT SPECIFICATION

(11) **EP 0 995 674 B1**
(45) Date of publication and mention of the grant of the patent: **20.08.2003**
(21) Application number: 99104594.9
(22) Date of filing: 08.03.1999
(51) Int. Cl.: B64D 27/18, B64D 27/02, B64D 29/02

(54) **Method for reducing wave resistance in airplane**
Verfahren zur Verminderung des Wellenwiderstandes eines Flugzeuges
Procédé pour la réduction de la résistance d'onde sur des avions

(30) Priority: 28.10.1998 JP 30699198; 19.10.1998 JP 29713198
(43) Date of publication of application: 26.04.2000
(73) Proprietor: HONDA GIKEN KOGYO KABUSHIKI KAISHA, Minato-ku Tokyo (JP)
(72) Inventor: Fujino, Michimasa, c/o K.K.Honda Gijutsu Kenkyusho, Wako-shi, Saitama (JP); Kawamura,Yuichi, c/o K.K.Honda Gijutsu Kenkyusho, Wako-shi, Saitama (JP)
(74) Representative: Prechtel, Jörg, Dipl.-Phys. Dr.

(56) References cited:
- EP-B- 0 432 972
- US-A- 4 311 289
- US-A- 4 314 681
- US-A- 4 449 680

## Description

### BACKGROUND OF THE INVENTION

### Field of the Invention

The present invention relates to a method for reducing the wave resistance in an airplane by retarding the generation of a shock wave on an upper surface of a main wing of the airplane when the airplane is cruising at a transonic speed.

### Description of the Related Art

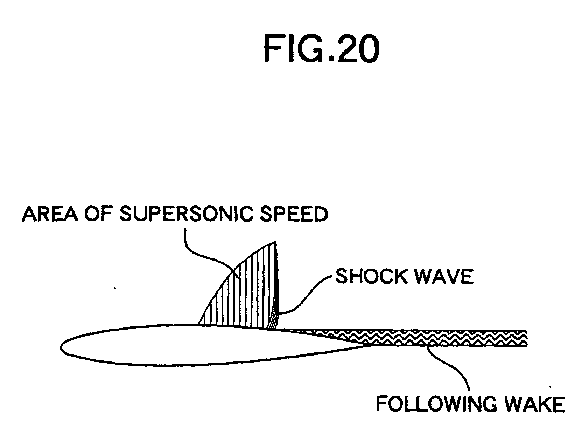

Even if the flying speed of the airplane is equal to or lower than the sonic speed, a shock wave is, when the airplane speed being increased, generated at a certain speed of the airplane in a range of transonic speed locally exceeding sonic speed by the flow accelerated at a portion of an airframe (see Fig. 20). If the shock wave is generated in this manner on the upper surface of the main wing, a wave resistance is produced by the shock wave to cause the sudden increase in drag and the sudden decrease in lift force.

The phenomenon of a sudden increase in drag due to the generation of the shock wave is called a drag emanation, and the mach number of a main flow at that time, is called a drag emanating mach number M_{DD}. When the flying speed of the air plane reaches the drag emanating mach number M_{DD}, not only is the amount of fuel consumed increased due to the increase in drag, but also the balance of an airframe of the airplane is adversely influenced by the movement of the center of wind pressure. For this reason, it is necessary to retard the generation of the shock wave as much as possible to increase the drag emanating mach number M_{DD}.

To increase the drag emanating mach number M_{DD}, the following technique is conventionally employed:
(1) a wing profile is used which provides a high drag emanating mach number M_{DD},
(2) a sweep-back angle is provided in the main wing, and the like.

In an airplane including an engine nacelle for accommodating a gas turbine engine, consideration is taken in the mounting position for the engine nacelle in order to suppress the drag generated due to the aerodynamic interference of the main wing or fuselage with the engine nacelle to the minimum. The reduction of interference drag is generally provided by mounting engine nacelles to laterally opposite sides of a rear portion of the fuselage having a small interference with a main wing in a business jet plane, and by mounting engine nacelles through pylons to a lower surface of the main wing along which air flows at a lower speed as compared with air flow along an upper surface of the main wing in a large-sized passenger airplane.

In general, in the wing profile having a small thickness, the drag emanating mach number M_{DD} is higher, but if the thickness is decreased, the volume of the main wing is decreased. For this reason, when a fuel tank is provided within the main wing, there is a problem that the amount of fuel carried therein is decreased, and moreover, there is a problem that a structure weight is increased, because a reduction in strength due to the decrease in thickness is compensated. Therefore, a peaky wing and a supercritical wing have been proposed as a wing profile which inhibits the generation of a shock wave, while ensuring a required thickness by improving the pressure profile on the main wing in the range of transonic speed.

If the sweep-back angle of the main wing is increased, the drag emanating mach number M_{DD} can be increased, while ensuring the wing thickness to a certain extent, but the following problems are encountered: the stalling characteristic at a lower speed is degraded; the structure weight is increased for opposing a large flexure moment applied to the root of the main wing; and it is difficult to employ a wing of a laminar flow type having a smaller friction resistance, due to a flow in a span direction.

The known documents directed to the above problems include U.S. Patent Nos. 4,311,289; 4,449,680; 4,314,681; 4,171,786 and 3,727,862.

U.S. Patent No. 4,311,289 describes the prevention of the generation of a shock wave by providing a channel defined by a rear edge of a main wing, a fuselage, an engine nacelle and a pylon. The ratio of the sectional area of a channel outlet to the minimum sectional area of the channel is set at 1:1.065 or less.

U.S. Patent No. 4,449,680 describes the reduction in effect of interference between an engine nacelle and a main wing by providing a critical counter area (a portion of the engine nacelle) and a non-critical counter area (the other portion of the engine nacelle and a pylon portion) from a critical zone of the main wing and a critical surface region of the engine nacelle, and forming the critical counter area into a shape which is along a streamline in the vicinity of such area and forming the non-critical counter area into a shape which is not along a streamline in the vicinity of such area.

U.S. Patent No. 4,314,681 proposes the reduction of the generation of a shock wave by disposing a fairing having a characteristic curve from a thickness-wise intermediate portion to a rear edge of a pylon.

U.S. Patent No. 4,171,786 proposes the avoidance of an increase in drag without use of a pylon by disposing an engine nacelle supported on a fuselage through an auxiliary wing above a main wing, and defining the height position of the engine nacelle with respect to an upper surface of the main wing and the longitudinal position of the engine nacelle with respect to a front edge of the main wing.

U.S. Patent No. 3,727,862 proposes the prevention of the generation of resonance between an engine and a main wing by supporting the engine nacelle on the upper surface of the main wing with an elastomer interposed therebetween.

### SUMMARY OF THE INVENTION

Accordingly, it is an object of the present invention to ensure that the generation of a shock wave is retarded to reduce the wave resistance by disposing a fluid element such as an engine nacelle at a predetermined position on the upper surface of the main wing, and positively superposing a decelerated region of the main flow generated by the fluid element onto an air flow on the upper surface of the main wing.

To achieve the above object, according to the present invention, there is provided a method for reducing the wave resistance in an airplane, which comprises disposing a fluid flow element within the main flow above a rear portion of an air flow on an upper surface of a main wing, which generates a negative pressure on the upper surface of the main wing of the airplane cruising at a transonic speed, and superposing a decelerated region of the main flow generated ahead of the fluid flow element, onto the air flow on the upper surface of the main wing to decelerate the air flow on the upper surface of the main wing, thereby reducing the negative pressure on the upper surface of the main wing to inhibit the generation of a shock wave.

When the speed of the airplane reaches a drag emanating mach number, a shock wave is generated on the upper surface of the main wing to suddenly increase the wave resistance. If the fluid element is disposed within the main flow above the rear portion of the air flow on the upper surface of the main wing, the air flow on the upper surface of the main wing is decelerated due to the superposition of the decelerated region of the main flow generated in front of the fluid element, and hence, the negative pressure on the upper surface of the main wing can be dropped to inhibit the generation of the shock wave. Thus, the generation of the wave resistance in a range of transonic speed can be retarded to increase the drag emanating mach number, thereby increasing the cruising speed.

According to a second aspect and feature of the present invention, the negative pressure at the time when the air flow on the upper surface of the main wing becomes sonic speed, is defined as the critical pressure coefficient; a reference point at which the profile of pressure in the direction of a wing chord on the upper surface of the main wing is changed from a state equal to or larger than the critical pressure coefficient to a state smaller than the critical pressure coefficient, is established on the wing chord; and a front end of the fluid element is disposed to the rear of a position in front of the reference point by 5% of the length of the wing chord.

If the position of the front end of the fluid element is too far ahead, the initial generation of the shock wave is inhibited, and a new shock wave is generated at a rear portion of the wing chord of the main wing. Therefore, if the front end of the fluid element is disposed to the rear of a position 5% (of the length of the wing chord) ahead of a reference point at which the negative pressure on the upper surface of the main wing is changed from a state equal to or larger than the critical pressure coefficient to a state smaller than the critical pressure coefficient, i.e., a reference point at which the flow speed of the air flow on the upper surface of the main wing is changed from a state equal to or higher than the sonic speed to a state lower than the sonic speed, the decelerated region of the main flow generated by the fluid element can be effectively superposed onto the air flow on the upper surface of the main wing to reliably inhibit the generation of the shock wave.

According to a third aspect and feature of the present invention, the longitudinal distance between a front end of the fluid element and a front edge of the main wing is in a range of 68% to 100% of the length of a wing chord.

If the longitudinal distance between the front end of the fluid element and the front edge of the main wing is set in the range of 68% to 100% of the length of the wing chord, a shock wave inhibiting effect can be exhibited.

According to a fourth aspect and feature of the present invention, the longitudinal distance between the front end of the fluid element and the front edge of the main wing is in a range of 75% to 85% of the length of a wing chord.

If the longitudinal distance between the front end of the fluid element and the front edge of the main wing is set in the range of 75% to 85% of the length of the wing chord, a shock wave inhibiting effect can be further effectively exhibited.

According to a fifth aspect and feature of the present invention, the vertical distance between the lower surface of the fluid element and the upper surface of the main wing is decreased with an increase in longitudinal distance between the front end of the fluid element and the front edge of the main wing.

If the vertical distance between the lower surface of the fluid element and the upper surface of the main wing is decreased with the increase in longitudinal distance between the front end of the fluid element and the front edge of the main wing, a shock wave inhibiting effect can be maintained, even if the longitudinal distance of the fluid element is changed.

According to a sixth aspect and feature of the present invention, the fluid element is a generally cylindrical engine nacelle covering a gas turbine engine.

The generally cylindrical engine nacelle covering the gas turbine engine is utilized as the fluid element to exhibit a shock wave inhibiting effect and hence, it is unnecessary to newly provide a special fluid element.

According to a seventh aspect and feature of the present invention, the negative pressure at the time when the air flow on the upper surface of the main wing becomes sonic speed, is defined as a critical pressure coefficient; a reference point at which the profile of pressure in a direction of the wing chord on the upper surface of the main wing is changed from a state equal to or larger than the critical pressure coefficient to a state smaller than the critical pressure coefficient, is established on the wing chord; and a front end of the engine nacelle is disposed between a position in front of the reference point by 5% of the length of the wing chord and a position to the rear of the reference point by a distance equal to the diameter of the lip front edge of the engine nacelle.

If the position of the front end of the engine nacelle is too far in front, the initial generation of the shock wave is inhibited, but a new shock wave is generated at a rear portion of the wing chord of the main wing. Therefore, if the front end of the engine nacelle is disposed to the rear of a position 5% (of the length of the wing chord) ahead of reference point at which the negative pressure on the upper surface of the main wing is changed to the value smaller than the critical pressure coefficient, i.e., a reference point at which the flow speed of the air flow on the upper surface of the main wing is changed from a state equal to or the higher than the sonic speed to a state lower than the sonic speed, the decelerated region of the main flow generated by the engine nacelle can be effectively superposed onto the air flow on the upper surface of the main wing to reliably inhibit the generation of a shock wave. On the other hand, if the front end of the engine nacelle is too much to the rear, the influence of the decelerated region of the main flow generated by the engine nacelle is diminished, resulting in a reduction in the effect of inhibiting the generation of the shock wave. Therefore, if the front end of the engine nacelle is disposed in front of the position to the rear of the reference point by the distance equal to the diameter of the lip front end of the engine nacelle, the decelerated region of the main flow generated by the engine nacelle can be effectively superposed onto the air flow on the upper surface of the main wing to reliably inhibit the generation of the shock wave.

According to an eighth aspect and feature of the present invention, the vertical distance between the upper surface of the main wing and the lower surface of the engine nacelle is in a range of 30% to 100% of the outside diameter of the engine nacelle.

If the vertical distance between the upper surface of the main wing and the lower surface of the engine nacelle is set in the range of 30% to 100% of the outside diameter of the engine nacelle, a shock wave inhibiting effect can be maintained, even if the longitudinal distance of the fluid element is changed.

According to a ninth aspect and feature of the present invention, the engine nacelle is supported by a pylon which is raised on the upper surface of the main wing.

If the engine nacelle is mounted on the upper surface of the main wing by the pylon, a wide cabin space in the fuselage can be ensured, as compared with the case where the engine nacelle is mounted on the fuselage. Moreover, the flexure moment applied to the root of the main wing by a lift force can be alleviated by the inertial weight of the engine to contribute to a reduction in weight of the structure.

The above and other objects, features and advantages of the invention will become apparent from the following description of the preferred embodiment taken in conjunction with the accompanying drawings.

### BRIEF DESCRIPTION OF THE DRAWINGS

Fig. 1 is a perspective view of a twin-engine business jet-propelled airplane to which the present invention is applied.
Fig. 2 is a diagram for explaining the parameter defining the longitudinal position of an engine nacelle.
Fig. 3 is a diagram for explaining the parameter defining the vertical position of the engine nacelle.
Fig. 4 is a diagram for explaining the parameter defining the position of the engine nacelle in a span direction.
Fig. 5 is a graph showing the relationship between the engine nacelle position X/C and the wave resistance.
Fig. 6 is a graph showing the relationship between the engine nacelle position X/C and the drag emanating mach number M_{DD}.
Fig. 7 is a graph showing the coefficient CP of pressure on an upper surface of a main wing along a wing chord.
Fig. 8 is a graph showing the relationship between the mach number M and the drag coefficient resulting from subtraction of a shape drag coefficient CD₀ from a total drag coefficient CDₜₒₜₐₗ as well as the drag emanating mach number M_{DD} in each of the engine nacelle positions.
Fig. 9 is a graph showing the total drag coefficient CDₜₒₜₐₗ in each of the engine nacelle positions and two mach numbers.
Fig. 10 is a graph showing the pressure profile provided along the wing chord without the engine nacelle.
Fig. 11 is a diagram showing the speed profile around the engine nacelle.
Fig. 12 is a diagram showing the speed profile in the vicinity of a tip end of the engine nacelle.
Fig. 13 is a graph showing the pressure profile provided along the wing chord when the engine nacelle position X/C is equal to 80%.
Fig. 14 is a graph showing the pressure profile provided along the wing chord when the engine nacelle position X/C is equal to 85%.
Fig. 15 is a graph showing the pressure profile provided along the wing chord when the engine nacelle position X/C is equal to 65%.
Fig. 16 shows the shape of an airframe having no engine nacelle.
Fig. 17 shows the shape of an airframe having an engine nacelle disposed on the upper surface of the main wing.
Fig. 18 shows the shape of an airframe having an engine nacelle disposed on a lower surface of the main wing.
Fig. 19 shows the shape of an airframe having an engine nacelle disposed at a rear portion of a fuselage.
Fig. 20 is a diagram for explaining a shock wave and a wave resistance.

### DETAILED DESCRIPTION OF THE PREFERRED EMBODIMENT

The present invention will now be described by way of an embodiment with reference to the accompanying drawings.

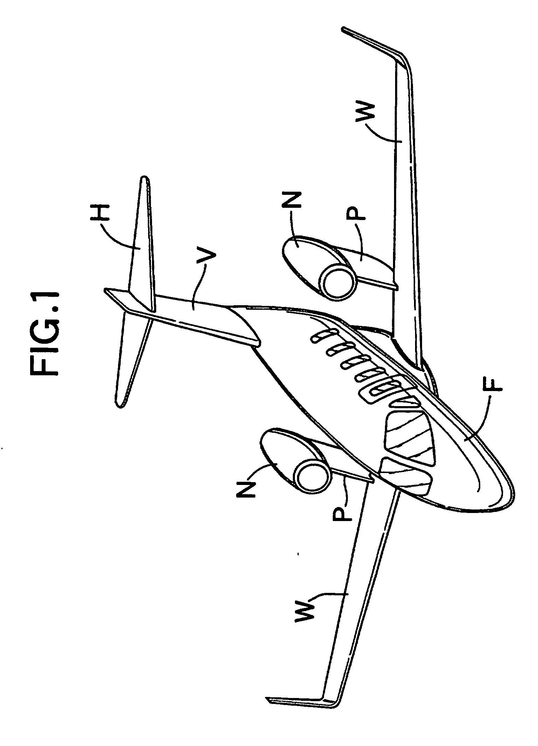

As shown in Fig. 1, an airplane in this embodiment is a business jet-propelled airplane including two gas turbine engines, and includes a fuselage F, left and right main wings W, W mounted on a lower surface of a central portion of the fuselage F, a vertical tail wing V mounted on a rear portion of the fuselage F, and a horizontal tail wing H mounted at an upper end of the vertical tail wing V. Generally cylindrical engine nacelles N, N covering the two gas turbine engines are respectively supported at upper ends of a pair of pylons P, P above the upper surfaces of the left and right main wings W, W.

The present invention is intended to inhibit the generation a shock wave on the upper surface of the main wing W by positively utilizing the interference of air flow on the upper surface of the main wing W with air flow in the vicinity of the engine nacelle N. Therefore, the position of engine nacelle N mounted relative to an airframe, is an important factor.

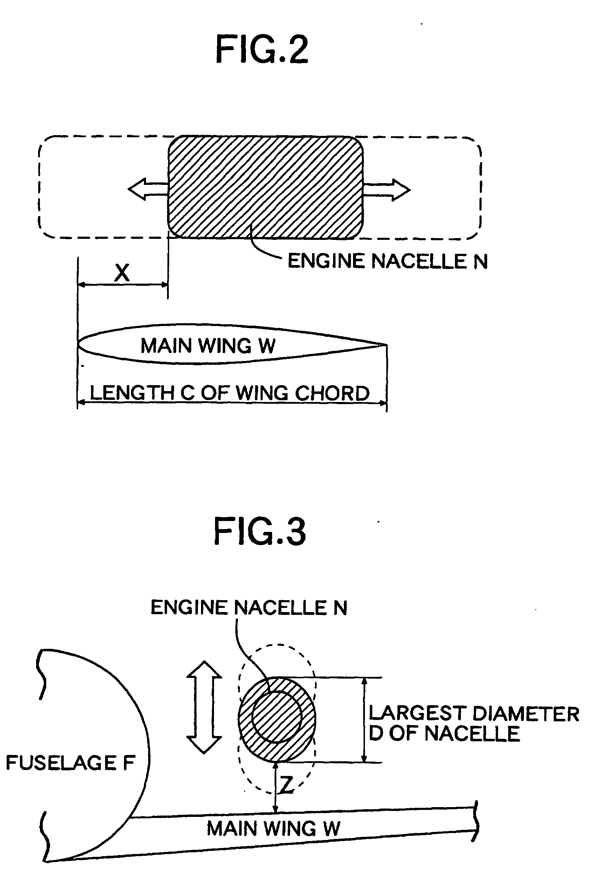

As shown in Fig. 2, the longitudinal mounting position of the engine nacelle N is based on a front edge of a main-wing chord below the engine nacelle N, and is defined as X/C (%) by a longitudinal distance X from the front edge of the wing chord to a front end (lip) of the engine nacelle N, and a length C of the wing chord. Therefore, when the front end of the engine nacelle N is located above the front edge of the main wing W, X/C is equal to 0%. When the front end of the engine nacelle N is located above a rear edge of the main wing W, X/C is equal to 100%.

As shown in Fig. 3, the vertical mounting position of the engine nacelle N is based on the uppermost surface of the main wing W below the engine nacelle N, and is defined as Z/D (%) by a vertical distance Z from the uppermost surface of the main wing W to the lowermost surface of the engine nacelle N, and the largest diameter D of the engine nacelle N. The vertical distance Z corresponds to a vertical spacing between the uppermost surface of the main wing W and the lowermost surface of the engine nacelle N in Fig. 3 which is a front view of the airframe.

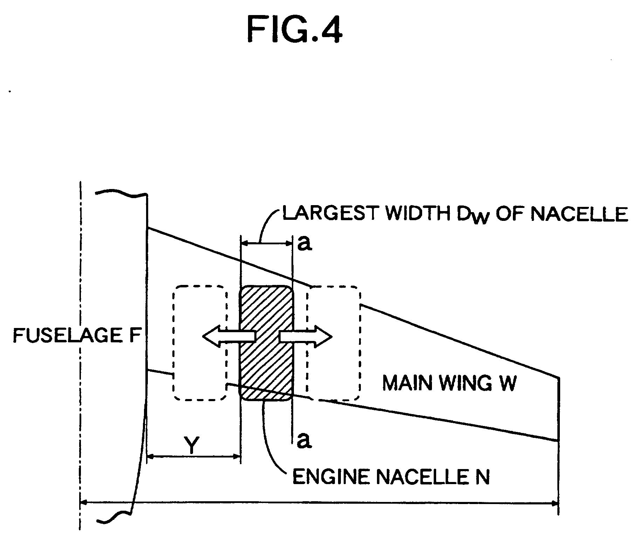

As shown in Fig. 4, the position of mounting the engine nacelle N in the span direction is based on an outer end of the fuselage F in the span direction and defined as Y/Dw (%) by a distance Y in the span direction from the outer end of the fuselage F in the span direction to an inner end of the engine nacelle N in the span direction, and the largest width Dw of the engine nacelle N.

Among the parameter (X/C) defining the longitudinal position of the engine nacelle N, the parameter Z/D defining the vertical position of the engine nacelle N and the parameter Y/Dw defining the span-wise position of the engine nacelle N, the parameter dominant for inhibiting the generation of a shock wave is X/C. The parameter Z/D defining the vertical position of the engine nacelle N has a smaller degree of influence, as compared with the parameter X/C, and the parameter Y/Dw defining the span-wise position of the engine nacelle N has an even smaller degree of influence.

With the forgoing in view, in the present embodiment, the parameter X/C defining the longitudinal position of the engine nacelle N was selected as the main parameter; and a wind tunnel test and analysis were carried out with the parameter Z/D set as a fixed value (Z/D = 0.5) and the parameter Y/Dw set as a fixed value (Y/Dw = 0.73). Here, Z/D = 0.5 is the vertical position of the engine nacelle N, in which a shock wave inhibiting effect is obtained effectively, and Y/Dw = 0.73 is the span-wise position of the engine nacelle N, in which the influence of the interference of coupled portions of the fuselage F and the main wing W can be avoided effectively.

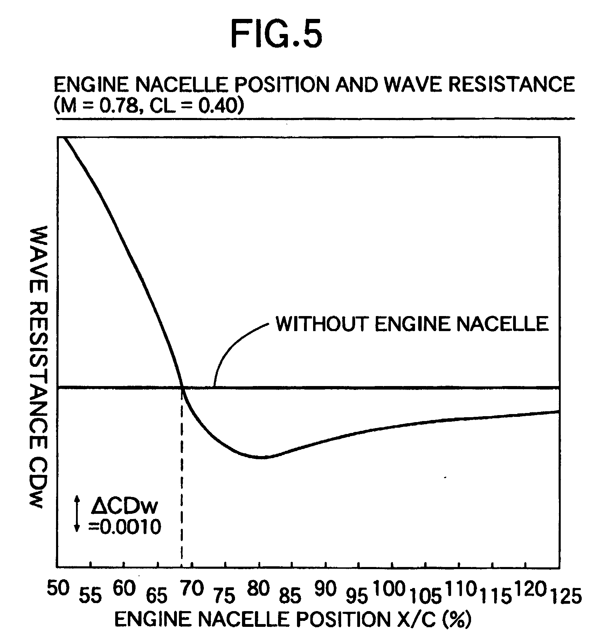

Fig. 5 is a graph showing the relationship between the engine nacelle position X/C and the wave resistance, wherein the mach number of a main flow is set at M = 0.78 corresponding to the mach number in which a shock wave is generated on the upper surface of the main wing W, and the lift coefficient is set at CL = 0.40 corresponding to the cruising speed of the airplane. If the engine nacelle position X/C is disposed to the rear of the 68% position on the wing chord, the wave resistance is decreased to the extent of 40% of the maximum value from a wave resistance provided without provision of the engine nacelle. If the engine nacelle position X/C is disposed in front of the 68% position on the wing chord, the wave resistance is suddenly increased from the wave resistance provided without provision of the engine nacelle.

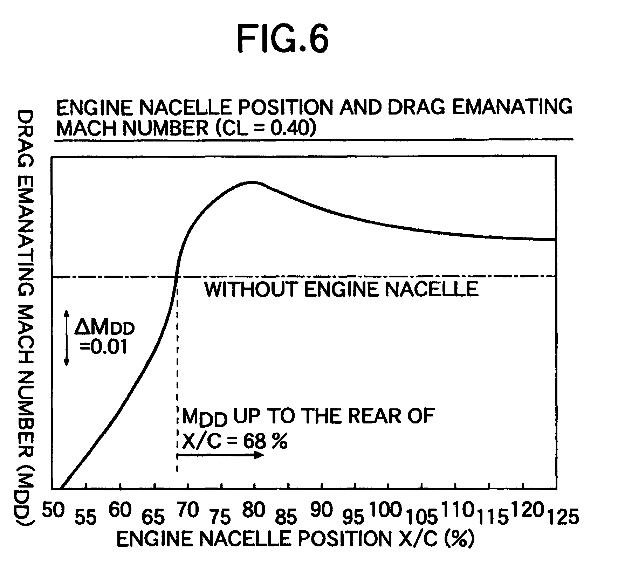

Fig. 6 is a graph showing the relationship between the engine nacelle position X/C and the drag emanating mach number M_{DD}, wherein the lift coefficient CL = 0.40. If the engine nacelle position X/C is disposed to the rear of a 68% position on the wing chord, the drag emanating mach number M_{DD} is increased from a drag emanating mach number M_{DD} provided without provision of the engine nacelle, and reaches the maximum value M_{DD} in an optimal position, i.e., the engine nacelle position X/C = 80%. On the other hand, if the engine nacelle position X/C is disposed in front of the 68% position on the wing chord, the drag emanating mach number M_{DD} is suddenly decreased from the drag emanating mach number M_{DD} provided without provision of the nacelle.

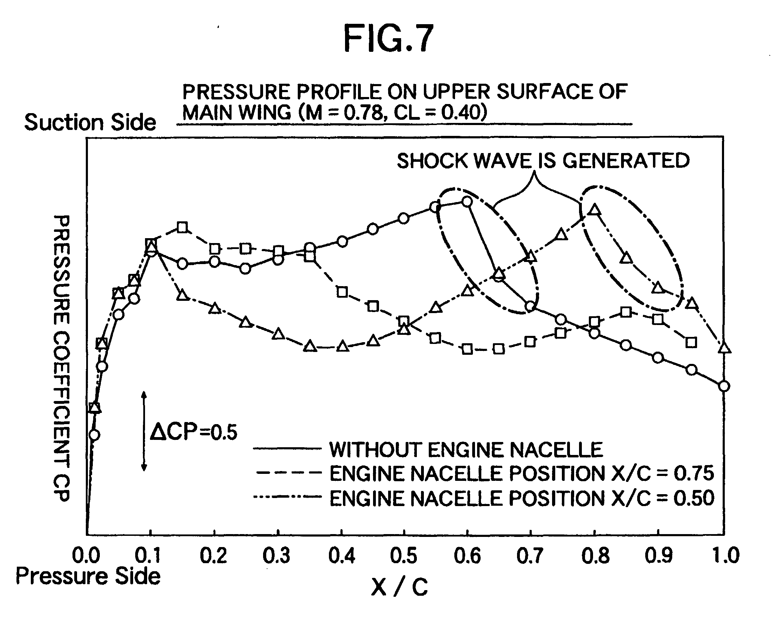

Fig. 7 is a graph showing the coefficient CP of pressure on the upper surface of the main wing corresponding to the wing chord extending along a line a-a in Fig. 4, wherein the solid line corresponds to the case where the engine nacelle is not provided; the dashed line corresponds to the case where the engine nacelle position X/C is equal to 75%; and the two-dot dashed line corresponds to the case where the engine nacelle position X/C is equal to 50%. In all of the cases, the mach number M of the main flow is equal to 0.78, and the lift coefficient CL is equal to 0.40. When the engine nacelle is not provided, a shock wave is generated due to an intensive pressure gradient near the 60% position on the wing chord, but when the engine nacelle position X/C is 75%, the negative pressure near the 60% position on the wing chord is dropped, whereby the intensive pressure gradient is moderated to inhibit the generation of the shock wave.

Namely, in the case of the engine nacelle position X/C equal to 75%, the pressure profile is a concave profile having two negative pressure peaks near the 15% position and near the 85% position on the wing chord. Particularly, the pressure coefficient is remarkably dropped near the 60% position on the chord, in which there is the negative pressure peak when the engine nacelle is not provided. Thus, the generation of the shock wave and the increase in wave resistance are prevented.

In the case of the engine nacelle position X/C equal to 50%, the pressure coefficient near the 40% position on the wing chord is remarkably dropped, and the pressure profile is a concave profile having two negative pressure peaks near the 10% position and near the 80% position on the wing chord. However, a shock wave is generated near the 80% position on the wing chord due to the presence of the negative pressure peak and the intensive pressure gradient succeeding thereto.

In the above way, if the engine nacelle position (X/C) is established to the rear of the 68% position on the wing chord, the drag emanating mach number M_{DD} is increased, as compared with the case where the engine nacelle is not provided, whereby it is difficult for the shock wave to be generated. However, if the engine nacelle position (X/C) is established in front of the 68% position on the wing chord, the shock wave is generated, causing the drag emanating mach number M_{DD} to be decreased.

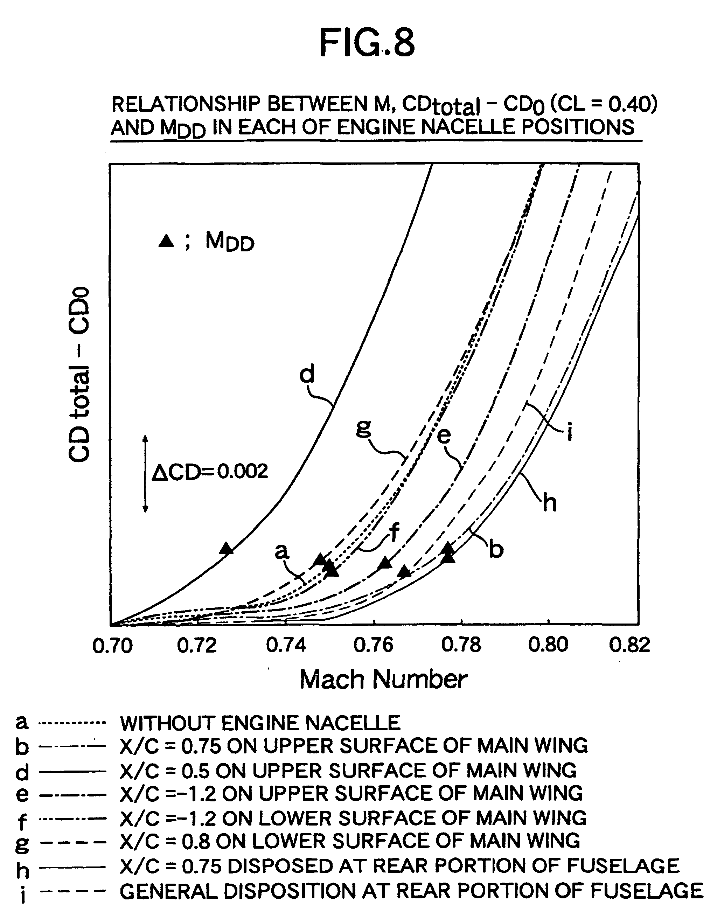

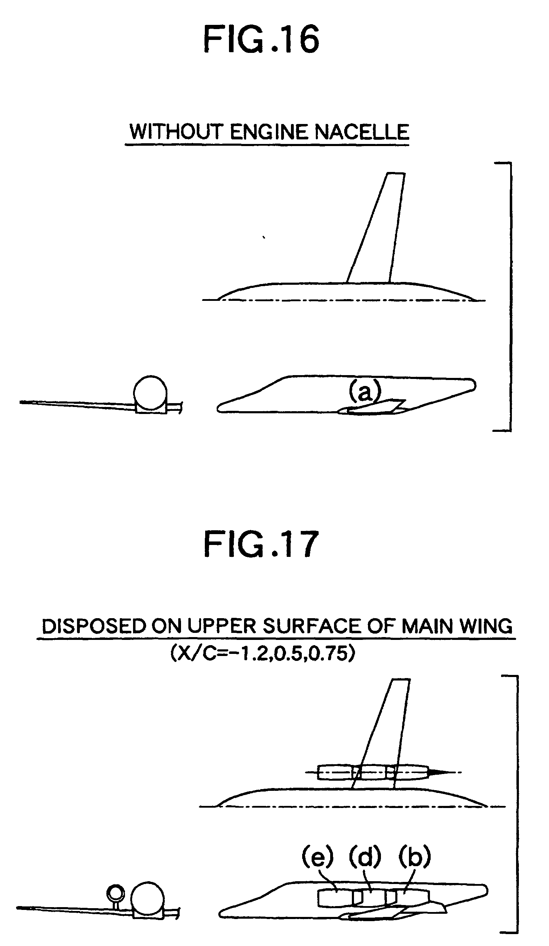

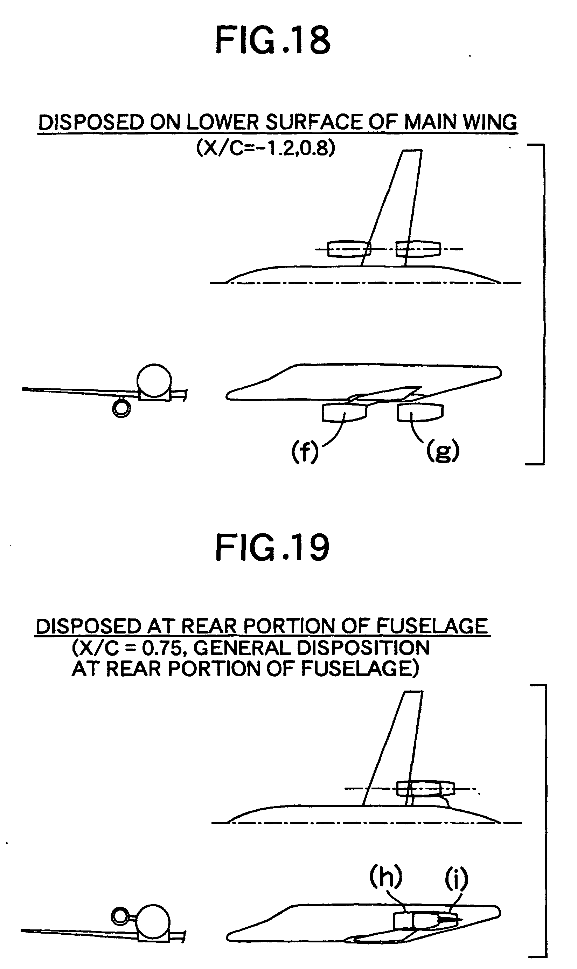

Fig. 8 is a graph showing the relationship between the mach number M and the drag coefficient resulting from subtraction of a shape drag coefficient CD₀ from a total drag coefficient CDₜₒₜₐₗ as well as the drag emanating mach number M_{DD} in each of the engine nacelle positions. In all of the cases, the lift coefficient CL is equal to 0.40. A line a corresponds to a reference case where the engine nacelle is not provided (see Fig. 16); lines b, d and e correspond to cases where the engine nacelle is provided on the upper surface of the main wing (see Fig. 17); lines f and g correspond to cases where the engine nacelle is provided on the lower surface of the main wing (see Fig. 18); and lines h and i correspond to cases where the engine nacelle is provided at a rear portion of the fuselage (see Fig. 19). ▲ plotted on each of the lines indicates the drag emanating mach number M_{DD} for every engine nacelle position.

When the engine nacelle is disposed on the upper surface of the main wing, the case of the engine nacelle position X/C equal to 75% (line b) is excellent, and in the entire range of mach number, the drag coefficient (CDₜₒₜₐₗ - CD₀) is lower than the line a (when the engine nacelle is not provided).

In the case of the engine nacelle position X/C equal to 50% (the line d), the drag coefficient (CDₜₒₜₐₗ - CD₀) is highest, and it is presumed that an intensive shock wave has been generated. In the case of the engine nacelle position X/C equal to -120% (the line e), the drag coefficient (CDₜₒₜₐₗ - CD₀) is lower than in the case of engine nacelle position X/C equal to 50%, and the effect of inhibiting the generation of the shock wave is observed for the present.

When the engine nacelle is disposed on the lower surface of the main wing, the effect of inhibiting the generation of the shock wave is not observed in the case of the engine nacelle position X/C equal to -120% (the line f) nor in the case of the engine nacelle position X/C equal to 80% (the line g). However, in the case indicated by the line f where the engine nacelle is disposed at a front lower portion of the main wing (this disposition is widely employed in a large-sized passenger airplane), it is observed that the drag coefficient (CDₜₒₜₐₗ - CD₀) is slightly lower than that in the case indicated by the line g where the engine nacelle is disposed at the rear lower portion of the main wing.

When the engine nacelle is disposed at the rear portion of the fuselage, the case of the engine nacelle position X/C equal to 75% (the line b) exhibits an excellent characteristic equivalent to that in the case where the engine nacelle is disposed in the position X/C = 75% on the upper surface of the main wing (the line b). This indicates that if the engine nacelle position X/C is equal to 75%, the equivalent shock wave inhibiting effect is obtained even if the engine nacelle is mounted on the main wing and on the fuselage. In the general disposition (X/C > 100%) of the engine nacelle at the rear portion of the fuselage indicated by the line i, the effect of inhibiting the generation of the shock wave is remarkably decreased.

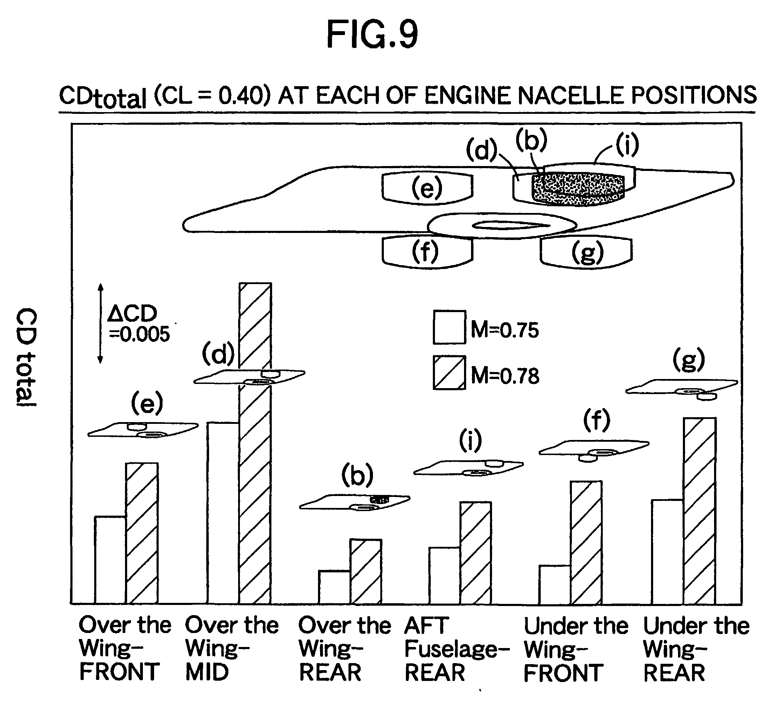

Fig. 9 is a graph showing the total drag coefficient CDₜₒₜₐₗ in each of the engine nacelle positions with respect to two types of mach numbers (M = 0.75 and M = 0.78). In all of the cases, the lift coefficient CL is equal to 0.40. Data in Fig. 9 corresponds to that in Fig. 8, and b, d, e, f, g, and i in Fig. 9 are the same as b, d, e, f, g, and i in Fig. 8. It is confirmed even from Fig. 9 that the total drag coefficient CDₜₒₜₐₗ is smallest in the case where the engine nacelle is disposed in the position X/C = 75% on the upper surface of the main wing (see b).

By disposing the engine nacelle in an appropriate position on the upper surface of the main wing, as described above, the drag emanating mach number M_{DD}, in which the shock wave is generated on the upper surface of the main wing to suddenly increase the wave resistance, can be varied in an increasing direction, thereby increasing the cruising speed, while suppressing the amount of fuel consumed to a lower level. In this embodiment, when the engine nacelle position is in a range lying in rear of X/C = 63%, the shock wave inhibiting effect is obtained, and the optimal position is near X/C = 80%. The preferable range of the engine nacelle position is X/C = 68% to 100% or X/C = 63% to 95%, and the particularly preferable range is X/C = 75% to 85%.

Appropriate values of the vertical position Z/D and the span-wise position Y/Dw of the engine nacelle and the effect thereof will be considered below.

The optimal vertical position with respect to the longitudinal position X/C = 75% of the engine nacelle is Z/D = 50%. However, if the vertical position Z/D is too small, a flow speed between the lower surface of the engine nacelle and the upper surface of the main wing is higher, and a shock wave is generated as in the case where the engine nacelle is disposed in the longitudinal position X/C = 0.5, and as a result, the wave resistance is increased. On the other hand, if the vertical position Z/D is too large, the influence exerted to an air flow along the upper surface of the main wing by the engine nacelle is reduced and hence, the effect is close to that in the case where the engine nacelle is not provided. In addition, from the viewpoint of an aspect of steering stability, the following disadvantage arises: the position of a thrust line is higher, and thus, the head-lowering moment is increased.

When the longitudinal position X/C of the engine nacelle is to be longitudinally moved in a range effective for inhibiting the shock wave, it is required that the vertical position Z/D be moved more upwards, as the longitudinal position X/C is moved more forwards, and the vertical position Z/D be moved more downwards, as the longitudinal position X/C is moved more rearwards. The range of the vertical position Z/D of the engine nacelle effective for inhibiting the shock wave is in the order of 0.3 to 1.0.

The optimal span-wise position Y/Dw of the engine nacelle with respect to the longitudinal position X/C = 75% of the engine nacelle, is equal to 0.73. The range in which the engine nacelle exhibits the shock wave inhibiting effect has an effect of some degree on the side of the fuselage and on the side of the wing end about a pylon. The coupled portions of the fuselage and the main wing are originally largely interfering portions and hence, a fairing measure or a measure to improve the wing profile of the wing root is generally taken, but the interference of the coupled portions of the fuselage and the main wing can be alleviated even with this disposition of the engine nacelle.

If the span-wise position Y/Dw of the engine nacelle is established too near the wing end, the shock wave inhibiting effect at the wing end is increased, and on the other hand, it is impossible to contribute to the alleviation of the interference of the coupled portions of the fuselage and the main wing. Conversely, if the span-wise position Y/Dw of the engine nacelle is established too near the fuselage, the shock wave inhibiting effect at the wing end may be decreased, but also the interference resistance of the coupled portions of the fuselage and the main wing may be increased in some cases. Therefore, the above-described span-wise position Y/Dw = 0.73 is an optimal span-wise position for the engine nacelle.

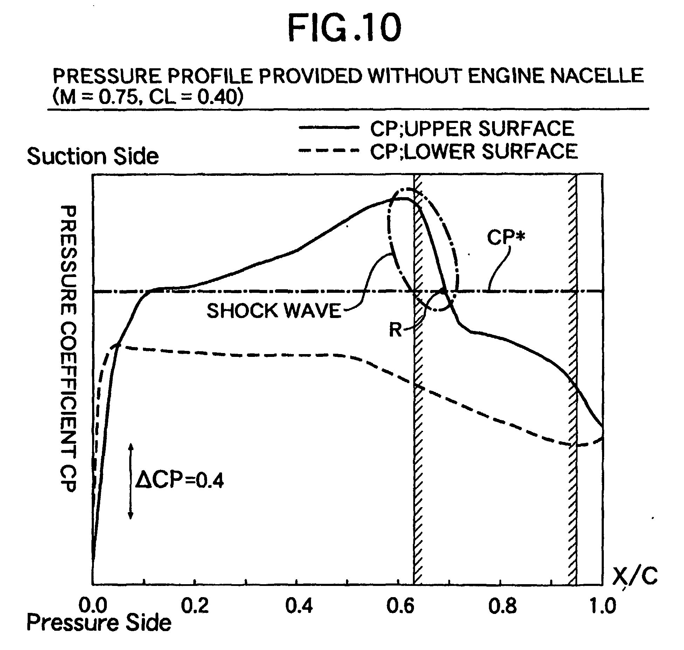

Fig. 10 shows a pressure profile along the wing chord when the engine nacelle is not provided; the mach number M is equal to 0.75; and the lift coefficient CL is equal to 0.40, wherein a shock wave is observed at near X/C = 70%. The critical pressure coefficient CP* shown by a one-dot dashed line is a pressure coefficient CP at the time when the flow speed on the upper surface of the main wing becomes the sonic speed (M = 1), and it can be seen that the flow speed exceeds the sonic speed in a range of X/C = 12% to 68% on the upper surface of the main wing. The line (solid line) of the pressure coefficient CP on the upper surface of the main wing crosses the line (one-dot dashed line) of the critical pressure coefficient CP* from a higher side to a lower side (from above to below in Fig. 10), and the intersection is determined as a reference point R (in this case, X/C = 68%).

As already described with reference to Fig. 6, the position of X/C = 68% is a position in which the drag emanating mach number M_{DD} can be increased when the front end of the engine nacelle is disposed to the rear of such position. Therefore, to determine the appropriate longitudinal position for the engine nacelle, the profile of pressure on the upper surface of the main wing is first determined in a state in which the engine nacelle is not provided, and then, the reference point R which is the intersection of the line of the pressure profile and the line of the critical pressure coefficient CP* is determined. The front end (lip) of the engine nacelle is disposed to the rear of the reference point R. Thus, it is possible to increase the drag emanating mach number M_{DD}.

The position (X/C = 68%) of the reference point R is not a universal threshold value for increasing the drag emanating mach number M_{DD}, and in general, if the front end of the engine nacelle is disposed to the rear of the position of X/C = 63% laying 5% ahead of the reference point R, the drag emanating mach number M_{DD} can be increased. However, when the front end of the engine nacelle is disposed to the rear of the reference point R (X/C = 68%), the drag emanating mach number M_{DD} can be reliably increased to provide a further large effect.

If the front end of the engine nacelle is too far to the rear from the reference point R, a decelerated region of a main flow generated by the engine nacelle cannot be superposed on the air flow on the upper surface of the main wing, and the effect of inhibiting the generation of the shock wave is decreased. When the diameter of the lip front edge of the engine nacelle is represented by D_{LIP}, if the position lying to the rear by the diameter D_{LIP} of the lip front edge from the reference point R, is established and the front end of the engine nacelle is disposed in front of such position, the drag emanating mach number M_{DD} can be increased to inhibit the generation of the shock wave. In the embodiment, the diameter D_{LIP} of the lip front edge is 27% of the length C of the wing chord and therefore, the front end of the engine nacelle may be disposed in front of the position of X/C = 95%.

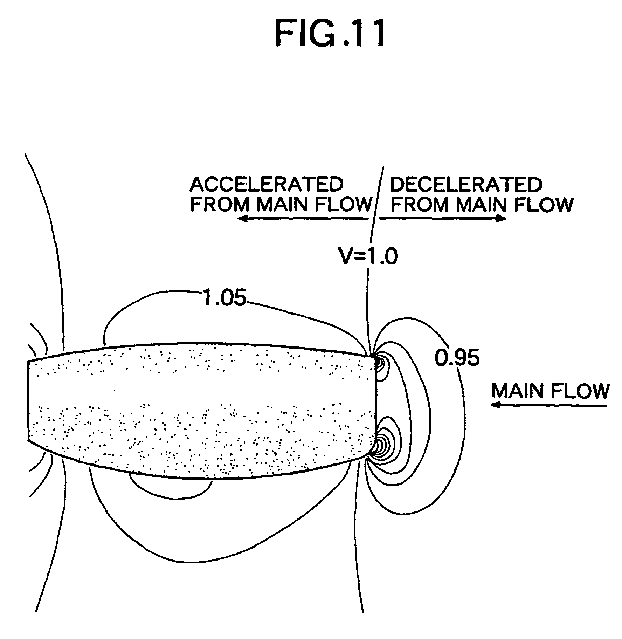

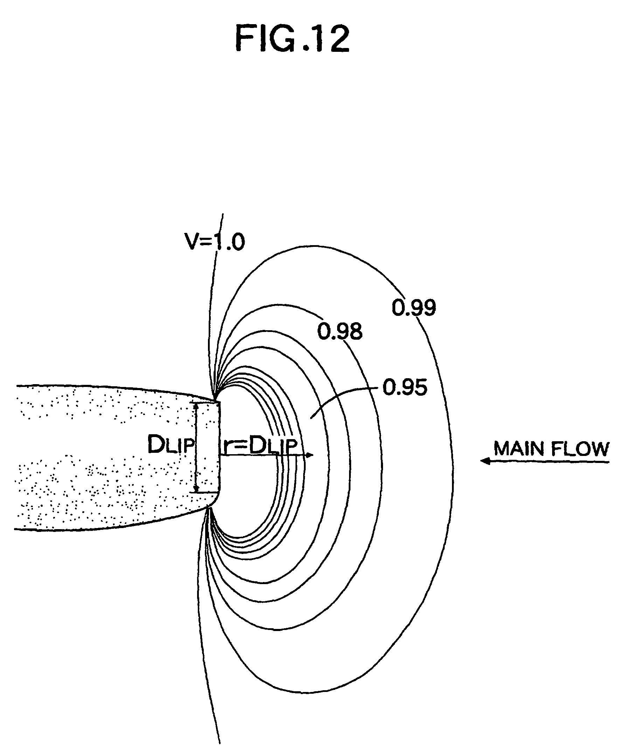

Figs. 11 and 12 show speed profiles around the engine nacelle in a state in which there is no suction and no exhaust in the engine and the air flow passes through the engine nacelle (i.e., a flow-through state), wherein the mach number M of the main flow is equal to 0.75. The value of V in Fig. 11 represents a ratio of the flow speed around the engine nacelle to the flow speed of the main flow. It can be seen that the flow speed in front of the front end of the engine nacelle is decreased more than the main flow, and the flow speed to the rear of the front end of the engine nacelle is increased more than the main flow. Here, the suction is not taken into consideration, but it is common that the suction speed of the engine is slower than the flow speed of the main flow in the range of transonic speed, and if the suction of the engine is taken into consideration, the decelerated region in front of the engine nacelle tends to widen.

Fig. 12 shows a speed profile in the vicinity of the front end of the engine nacelle in an enlarged scale. If the diameter of a lip front edge of the engine nacelle is represented by D_{LIP}, the flow speed of the main flow is decreased by 5% or more in a substantially semi-circular area having a radius of D_{LIP}, in front of the engine nacelle. The flow speed in rear of the lip front edge of the engine nacelle is increased more than the flow speed of the main flow.

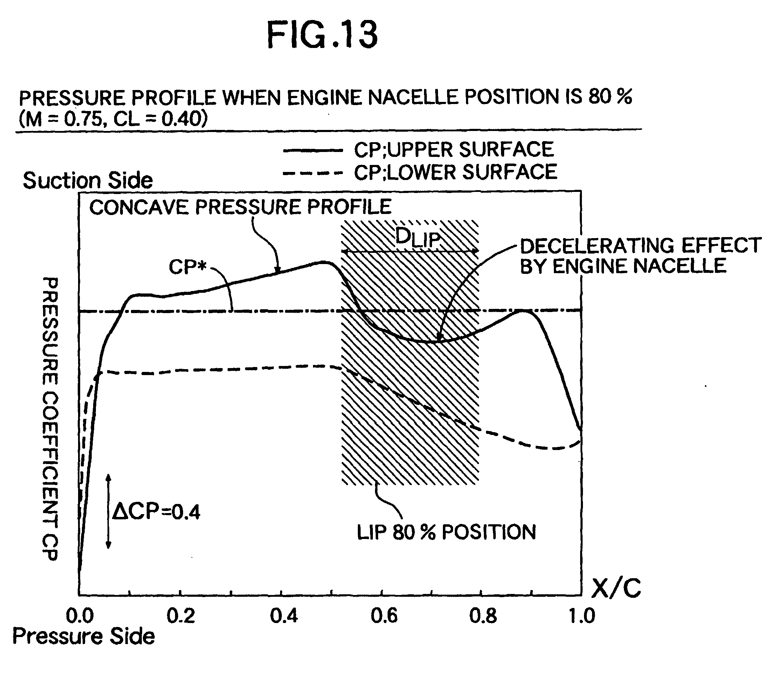

Fig. 13 shows a pressure profile provided when the front end of the engine nacelle is disposed in the position X/C = 80% on the upper surface of the main wing in a state in which the mach number M is equal to 0.75 and the lift coefficient CL is equal to 0.40. As is apparent by comparison with the pressure profile (see Fig. 10) provided without provision of the engine nacelle under the same conditions, it can be seen that the negative pressure peak is remarkably dropped in the decelerated region in front of the engine nacelle (an obliquely lined area) in Fig. 13, and as a result, the pressure gradient is gentle or smoother, as compared with that in Fig. 10, whereby the generation of the shock wave is inhibited. It can be seen that in the pressure profile shown by the dashed line in Fig. 7 (in the case where the engine nacelle position X/C = 75%), the pressure gradient is gentle as in Fig. 13, whereby the generation of the shock wave is inhibited.

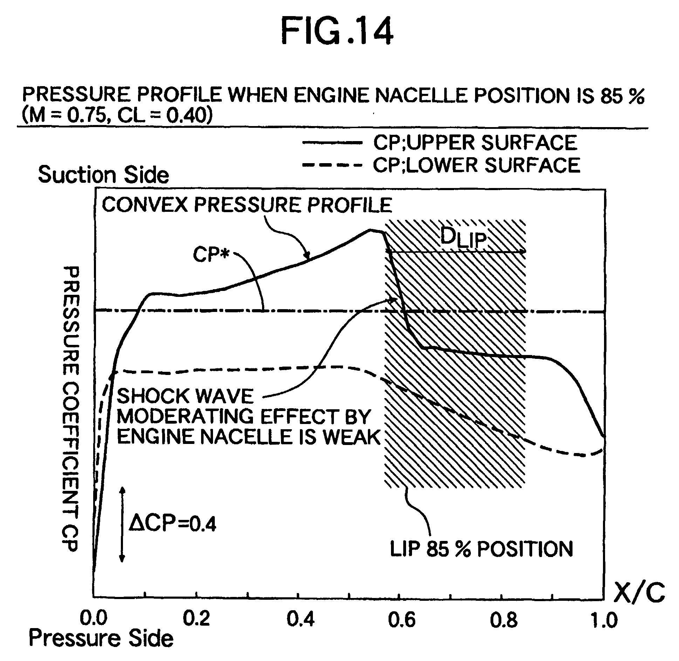

Fig. 14 shows a pressure profile when the front end of the engine nacelle is disposed in the position of X/C = 85% on the upper surface of the main wing in a state in which the mach number M is equal to 0.75, and the lift coefficient CL is equal to 0.40. As is apparent by comparison with Fig. 13, the front negative peak is higher and the rear negative pressure peak has disappeared due to the 5% backward-displacement of the position of the engine nacelle, thereby providing an entirely convex profile having a negative pressure peak at a central portion. As a result, a region having a relatively large pressure gradient is produced at near a point corresponding to 60% of the wing chord, but the pressure gradient is smaller as compared with the pressure gradient (see Fig. 10) provided when the engine nacelle is not provided, and the effect of inhibiting the generation of the shock wave is observed for the present.

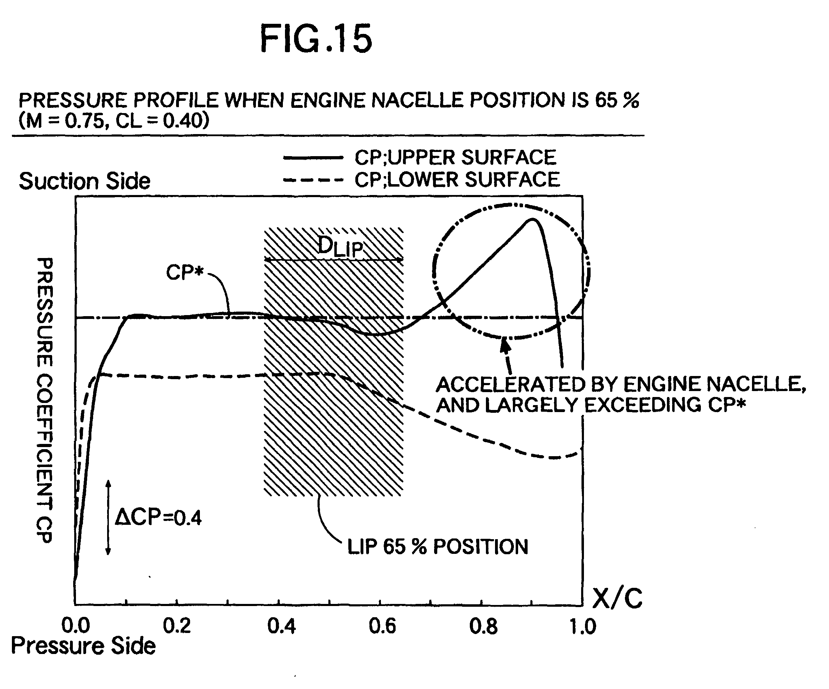

Fig. 15 shows a pressure profile when the front end of the engine nacelle is disposed in the position of X/C = 65% on the upper surface of the main wing in a state in which the mach number M is equal to 0.75, and the lift coefficient CL is equal to 0.40. As is apparent by comparison with Fig. 13, it can be seen that a rear intensive negative pressure peak is produced in place of the disappearance of the front negative pressure peak due to the 15% forward-displacement of the engine nacelle position, and the shock wave is generated thereat to decrease the drag emanating mach number M_{DD}.

The reason why the generation of the shock wave can be inhibited according to the present invention is considered as described below. If the engine nacelle is disposed on the upper surface of the main wing, the decelerated region (see Fig. 12) of the main flow formed in front of the engine nacelle is superposed onto the air flow on the upper surface of the main wing, and the air flow on the upper surface of the main wing is partially decelerated. Therefore, if the decelerated region in front of the engine nacelle is superposed on the position in which the flow speed of the air flow on the upper surface of the main wing is high, i.e., the position in which the shock wave is generated, the negative pressure in such area can be dropped to the critical pressure coefficient CP* or less to inhibit the generation of the shock wave and the increase in wave resistance and as a result, the drag emanating mach number M_{DD} can be increased.

Thus, according to the present invention, the wave resistance can be decreased without decreasing the thickness of the main wing and without increasing the sweep-back angle of the main wing. Therefore, the cruising speed of the airplane can be increased without bringing about the deterioration of the stalling characteristic and the like during flying the airplane at a lower speed. Moreover, a laminar flow wing profile of a lower resistance can be employed by decreasing the sweep-forward angle of the main wing and hence, the fuel retrenching effect during cruising of the airplane can be further enhanced.

The supporting of the engine on the main wing provides an advantage which will be described below, as compared with the case where the engine is supported on the fuselage. More specifically, the structure for supporting the engine on the fuselage does not pass through the fuselage and hence, a wide space for a cabin can be ensured, also the weight of the structure can be reduced by supporting the engine on the main wing which originally has a higher rigidity, and the flexure moment applied to the root of the main wing by the lift force provided during flying of the airplane can be reduced with the weight of the engine, whereby the weight of the structure can be reduced.

The fluid element is not limited to the engine nacelle N illustrated in the above embodiment, and may be any element which is capable of generating a decelerated region of a main flow in front of the element. In addition, the pylon P may be mounted on a side of the fuselage F in place of being mounted on the upper surface of the main wing W.
Although the embodiment of the present invention has been described in detail, it will be understood that the present invention is not limited to the above-described embodiment, and various modifications may be made without departing from the scope of the invention defined in claims.

## Claims

1. A method for reducing the wave resistance in an airplane, which comprises disposing a fluid flow element within a main flow above a rear portion of an air flow on an upper surface of the main wing of the airplane, for generating a negative pressure on the upper surface of the main wing of the airplane cruising at a transonic speed, and superposing a decelerated region of the main flow generated in front of the fluid flow element onto the air flow on the upper surface of the main wing to decelerate the air flow on the upper surface of the main wing, thereby reducing the negative pressure on the upper surface of the main wing to inhibit the generation of a shock wave.

2. A method for reducing the wave resistance of an airplane according to Claim 1, wherein the negative pressure when the air flow on the upper surface of the main wing becomes sonic speed, is defined as the critical pressure coefficient; the method including establishing on the wing chord a reference point at which the profile of pressure on the upper surface of the main wing is changed from a state equal to or larger than the critical pressure coefficient to a state smaller than the critical pressure coefficient; and disposing a front end of the fluid flow element to the rear of a position in front of the reference point by 5% of the length of the wing chord.

3. A method for reducing the wave resistance of an airplane according to Claim 1, wherein the longitudinal distance between the front end of the fluid flow element and the front edge of the main wing is in a range of 68% to 100% of the length of the wing chord.

4. A method for reducing the wave resistance of an airplane according to Claim 1, wherein the longitudinal distance between the front end of the fluid flow element and the. front edge of the main wing is in a range of 75% to 85% of the length of the wing chord.

5. A method for reducing the wave resistance of an airplane according to Claim 1, wherein the vertical distance between the lower surface of the fluid flow element and the upper surface of the main wing is decreased with a corresponding increase in longitudinal distance between the front end of the fluid flow element and the front edge of the main wing.

6. A method for reducing the wave resistance of an airplane according to Claim 1, wherein the fluid flow element is a substantially cylindrical engine nacelle covering a gas turbine engine.

7. A method for reducing the wave resistance in an airplane according to Claim 6, wherein the negative pressure when the air flow on the upper surface of the main wing becomes sonic speed, is defined as a critical pressure coefficient; the method including establishing on the wing chord a reference point at which the profile of pressure on the upper surface of the main wing is changed from a state equal to or larger than the critical pressure coefficient to a state smaller than the critical pressure coefficient; and the front end of the engine nacelle is disposed between a position in front of the reference point by 5% of the length of the wing chord and a position behind the reference point by a distance equal to the diameter of the lip front edge of the engine nacelle.

8. A method for reducing the wave resistance in an airplane according to Claim 6, wherein the vertical distance between the upper surface of the main wing and the lower surface of the engine nacelle is in a range of 30% to 100% of the outside diameter of the engine nacelle.

9. A method for reducing the wave resistance in an airplane according to Claim 6, wherein the engine nacelle is supported by a pylon rising from the upper surface of the main wing.

## Patentansprüche

1. Verfahren zur Reduzierung des Wellenwiderstandes in einem Flugzeug, welches das Anordnen eines Fluidströmungselements innerhalb einer Hauptströmung über einem hinteren Abschnitt einer Luftströmung an einer oberen Fläche des Haupttragflügels des Flugzeugs umfasst, um einen Unterdruck an der oberen Fläche des Haupttragflügels des mit einer transsonischen Geschwindigkeit fliegenden Flugzeugs zu erzeugen, und Überlagern eines abgebremsten Bereichs der vor dem Fluidströmungselement erzeugten Luftströmung über die Luftströmung an der oberen Fläche des Haupttragflügels, um die Luftströmung an der oberen Fläche des Haupttragflügels abzubremsen, wodurch der Unterdruck an der oberen Fläche des Haupttragflügels reduziert wird, um die Erzeugung einer Schockwelle zu verhindern.

2. Verfahren zur Reduzierung des Wellenwiderstands eines Flugzeugs nach Anspruch 1, wobei dann, wenn die Luftströmung an der oberen Fläche des Haupttragflügels Schallgeschwindigkeit erreicht, der Unterdruck als der kritische Druckkoeffizient definiert wird, wobei das Verfahren das Festlegen eines Referenzpunkts an der Tragflügelsehne umfasst, bei dem das Druckprofil an der oberen Fläche des Haupttragflügels von einem Zustand gleich oder größer als der kritische Druckkoeffizient zu einem Zustand kleiner als der kritische Druckkoeffizient verändert wird, und das Anordnen eines vorderen Endes des Fluidströmungselements hinter einer Position umfasst, die um 5 % der Länge der Tragflügelsehne vor dem Referenzpunkt liegt.

3. Verfahren zur Reduzierung des Wellenwiderstands eines Flugzeugs nach Anspruch 1, wobei der Längsabstand zwischen dem vorderen Ende des Fluidströmungselements und der vorderen Kante des Haupttragflügels in einem Bereich von 68 % bis 100 % der Länge der Tragflügelsehne liegt.

4. Verfahren zur Reduzierung des Wellenwiderstands eines Flugzeugs nach Anspruch 1, wobei der Längsabstand zwischen dem vorderen Ende des Fluidströmungselements und der vorderen Kante des Haupttragflügels in einem Bereich von 75 % bis 85 % der Länge der Tragflügelsehne liegt.

5. Verfahren zur Reduzierung des Wellenwiderstands eines Flugzeugs nach Anspruch 1, wobei der vertikale Abstand zwischen der unteren Fläche des Fluidströmungselements und der oberen Fläche des Haupttragflügels sich mit einem entsprechenden Anstieg des Längsabstands zwischen dem vorderen Ende des Fluidströmungselements und der vorderen Kante des Haupttragflügels verringert.

6. Verfahren zur Reduzierung des Wellenwiderstands eines Flugzeugs nach Anspruch 1, wobei das Fluidströmungselement eine im Wesentlichen zylindrische Triebwerksgondel ist, die ein Gasturbinentriebwerk abdeckt.

7. Verfahren zur Reduzierung des Wellenwiderstands eines Flugzeugs nach Anspruch 6, wobei dann, wenn die Luftströmung an der oberen Fläche des Haupttragflügels Schallgeschwindigkeit erreicht, der Unterdruck als ein kritischer Druckkoeffizient definiert wird, wobei das Verfahren das Festlegen eines Referenzpunkts an der Tragflügelsehne umfasst, bei dem das Druckprofil an der oberen Fläche des Haupttragflügels von einem Zustand gleich oder größer als der kritische Druckkoeffizient zu einem Zustand kleiner als der kritische Druckkoeffizient verändert wird, und wobei das vordere Ende der Triebwerksgondel zwischen einer Position, die um 5 % der Länge der Tragflügelsehne vor dem Referenzpunkt liegt, und einer Position, die um einen Abstand gleich dem Durchmesser der Vorderkante des Triebwerkgondelrands hinter dem Referenzpunkt liegt, angeordnet ist.

8. Verfahren zur Reduzierung des Wellenwiderstands eines Flugzeugs nach Anspruch 6, wobei der vertikale Abstand zwischen der oberen Fläche des Haupttragflügels und der unteren Fläche der Triebwerksgondel in einem Bereich von 30 % bis 100 % des Außendurchmessers der Triebwerksgondel liegt.

9. Verfahren zur Reduzierung des Wellenwiderstands eines Flugzeugs nach Anspruch 6, wobei die Triebwerksgondel durch einen Pylon getragen ist, der von der oberen Fläche des Haupttragflügels nach oben verläuft.

## Revendications

1. Procédé pour réduire la résistance d'onde dans un avion, qui comprend le fait de disposer un élément d'écoulement de fluide à l'intérieur d'un écoulement principal au-dessus d'une partie arrière d'un écoulement d'air sur une surface supérieure du plan central de voilure de l'avion, pour générer une pression négative sur la surface supérieure du plan central de voilure de l'avion volant à une vitesse de croisière transsonique, et le fait de superposer une région de décélération de l'écoulement principal généré devant l'élément d'écoulement de fluide sur l'écoulement d'air sur la surface supérieure du plan central de voilure pour ralentir l'écoulement d'air sur la surface supérieure du plan central de voilure, réduisant ainsi la pression négative sur la surface supérieure du plan central de voilure pour inhiber la génération d'une onde de choc.

2. Procédé pour réduire la résistance d'onde d'un avion selon la revendication 1, dans lequel la pression négative lorsque l'écoulement d'air sur la surface supérieure du plan central de voilure passe à la vitesse sonique, est définie comme le coefficient de pression critique ; le procédé comprenant le fait d'établir sur la corde de voilure un point de référence au niveau duquel le profil de pression sur la surface supérieure du plan central de voilure est changé d'un état égal à ou plus grand que le coefficient de pression critique à un état plus petit que le coefficient de pression critique ; et le fait de disposer une extrémité avant de l'élément d'écoulement de fluide à l'arrière d'une position devant le point de référence d'une distance égale à 5 % de la longueur de la corde de voilure.

3. Procédé pour réduire la résistance d'onde d'un avion selon la revendication 1, dans lequel la distance longitudinale entre l'extrémité avant de l'élément d'écoulement de fluide et le bord d'attaque du plan central de voilure est comprise dans un éventail allant de 68 % à 100 % de la longueur de la corde de voilure.

4. Procédé pour réduire la résistance d'onde d'un avion selon la revendication 1, dans lequel la distance longitudinale entre l'extrémité avant de l'élément d'écoulement de fluide et le bord d'attaque du plan central de voilure est comprise dans un éventail allant de 75 % à 85 % de la longueur de la corde de voilure.

5. Procédé pour réduire la résistance d'onde d'un avion selon la revendication 1, dans lequel la distance verticale entre la surface inférieure de l'élément d'écoulement de fluide et la surface supérieure du plan central de voilure est diminuée avec une augmentation correspondante de la distance longitudinale entre l'extrémité avant de l'élément d'écoulement de fluide et le bord d'attaque du plan central de voilure.

6. Procédé pour réduire la résistance d'onde d'un avion selon la revendication 1, dans lequel l'élément d'écoulement de fluide est une nacelle moteur sensiblement cylindrique recouvrant un moteur de turbine à gaz.

7. Procédé pour réduire la résistance d'onde dans un avion selon la revendication 6, dans lequel la pression négative lorsque l'écoulement d'air sur la surface supérieure du plan central de voilure passe à la vitesse sonique, est définie comme un coefficient de pression critique ; le procédé comprenant le fait d'établir sur la corde de voilure un point de référence au niveau duquel le profil de pression sur la surface supérieure du plan central de voilure est changé d'un état égal à ou plus grand que le coefficient de pression critique à un état plus petit que le coefficient de pression critique ; et l'extrémité avant de la nacelle moteur est disposée entre une position devant le point de référence d'une distance égale à 5 % de la longueur de la corde de voilure et une position derrière le point de référence d'une distance égale au diamètre du bord d'attaque de la lèvre de la nacelle moteur.

8. Procédé pour réduire la résistance d'onde dans un avion selon la revendication 6, dans lequel la distance verticale entre la surface supérieure du plan central de voilure et la surface inférieure de la nacelle moteur est comprise dans un éventail allant de 30 % à 100 % du diamètre extérieur de la nacelle moteur.

9. Procédé pour réduire la résistance d'onde selon la revendication 6, dans lequel la nacelle moteur est supportée par un pylône s'élevant à partir de la surface supérieure du plan central de voilure.
